# EUROPEAN PATENT APPLICATION

(11) **EP 4 742 789 A1**
(43) Date of publication of application: **13.05.2026**
(21) Application number: 23944428.4
(22) Date of filing: 06.07.2023
(51) Int. Cl.: H04W 72/0446, H02J 50/80, H04W 72/0453, H04W 92/18

(54) **TERMINAL AND POWER SUPPLY METHOD**

(71) Applicant: NTT DOCOMO, INC., Tokyo 100-6150 (JP)
(72) Inventor: YOSHIOKA, Shohei, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2023/025205
(87) International publication number: WO 2025/009181

(57) **Abstract**

A terminal includes: a communication unit configured to receive a discovery signal from a first terminal or to transmit a discovery signal to the first terminal. The communication unit transmits an energy charge request signal to the first terminal, the communication unit receives information indicating a first resource used for energy charge from the first terminal, and the communication unit includes an energy reception unit configured to receive energy charge from the first terminal by using the first resource.

## Description

### TECHNICAL FIELD

The present invention relates to a terminal and an energy charge method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Literature 1).

In LTE or NR, there is definition of a UE category or a UE capability for the function-reduced IoT (Internet of Things) in which functions, such as functions related to transmission/reception bandwidth part or the number of antennas, to be supported as mandatory by normal terminals, are removed. For example, in LTE, eMTC (enhanced Machine Type Communication), NB-IoT (Narrow Band IoT), etc., are defined, and in NR, RedCap (Reduced Capability), etc., are defined.

In recent years, with respect to the energy charge method for various devices including the IoT terminals, energy charge technologies using wireless communications have been attracting attention and have been actively discussed. For example, discussions are held on: allocating a specific frequency band for wireless energy charge; verifying the impact on the human body, radio wave interference with other communication devices, or the like; and, if there are no problems, expanding the application range to outdoors or spaces with people.

In addition, in the 3GPP (registered trademark), discussions are held on developing the technical specifications for ultra-low power consumption terminals based on the assumption that the energy charge is performed by surrounding environments such as sunlight, wind, water, electromagnetism, heat, sound, vibration, etc., or by radio waves (for example, Non-Patent Literature 2).

### CITATION LIST

### Non-Patent Literature

Non-Patent Literature 1: 3GPP TS 38.300 V17.3.0 (2022-12)
Non-Patent Literature 2: 3GPP TR 22.840 V1.0.0 (2022-12)

### SUMMARY OF INVENTION

### TECHNICAL PROBLEM

A use case in which a terminal performs wireless energy charge for another device is expected from among the various use cases. However, it is unclear how to perform wireless energy charge when the terminal performs sidelink communications.

The present invention has been made in view of the above points, and it is an object of the present invention to perform wireless energy charge in the wireless communication system.

### SOLUTION TO PROBLEM

According to the disclosed technique, a terminal is provided. The terminal includes: a communication unit configured to receive a discovery signal from a first terminal or to transmit a discovery signal to the first terminal. The communication unit transmits an energy charge request signal to the first terminal, the communication unit receives information indicating a first resource used for energy charge from the first terminal, and the communication unit includes an energy reception unit configured to receive energy charge from the first terminal by using the first resource.

### ADVANTAGEOUS EFFECTS OF INVENTION

According to the disclosed technique, wireless energy charge can be performed by the terminal in the wireless communication system.

### BRIEF DESCRIPTION OF DRAWINGS

[Fig. 1] is a drawing illustrating an example of a configuration of a wireless communication system.
[Fig. 2] is a drawing illustrating a configuration example (1) of wireless energy charge related to an embodiment of the present invention.
[Fig. 3] is a drawing illustrating a configuration example (2) of wireless energy charge related to an embodiment of the present invention.
[Fig. 4] is a sequence diagram for describing an example of wireless energy charge related to an embodiment of the present invention.
[Fig. 5] is a flowchart for describing an example of wireless energy charge related to an embodiment of the present invention.
[Fig. 6] is a drawing illustrating an example (1) of wireless energy charge related to an embodiment of the present invention.
[Fig. 7] is a drawing illustrating an example (2) of wireless energy charge related to an embodiment of the present invention.
[Fig. 8] is a drawing illustrating an example (3) of wireless energy charge related to an embodiment of the present invention.
[Fig. 9] is a drawing illustrating an example (4) of wireless energy charge related to an embodiment of the present invention.
[Fig. 10] is drawing illustrating an example of a functional structure of a base station 10 related to an embodiment of the present invention.
[Fig. 11] is a drawing illustrating an example of a functional structure of a terminal 20 related to an embodiment of the present invention.
[Fig. 12] is a drawing illustrating an example of a hardware structure of the base station 10 or the terminal 20 related to an embodiment of the present invention.
[Fig. 13] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR or 6G wireless standards).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

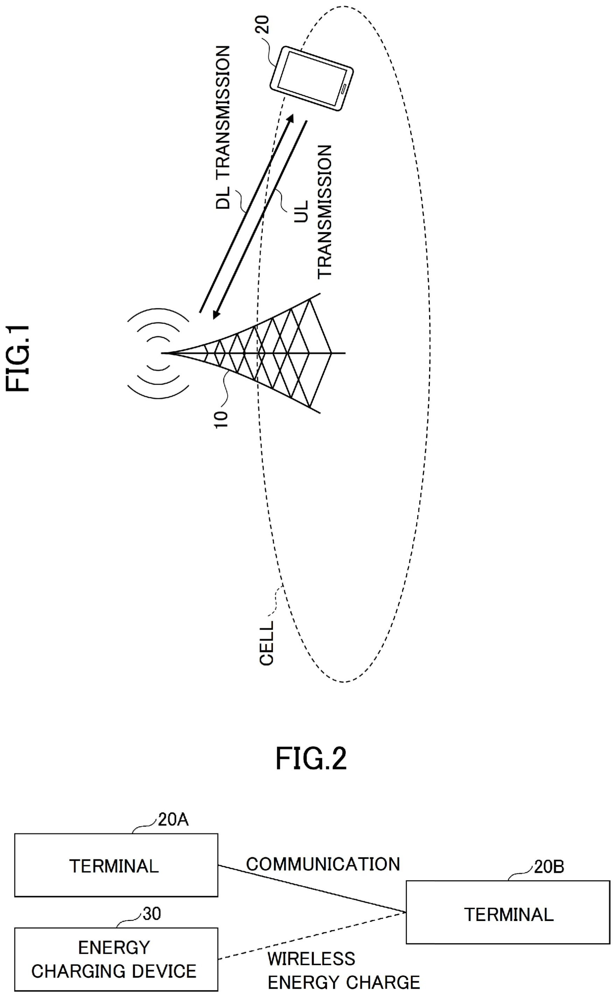

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

With the proliferation of various devices (for example, IoT terminals), charging methods and battery changing methods for the significant amount of terminals are being discussed. In recent years, with respect to the energy charge method for various devices including the IoT terminals, energy charge technologies using wireless communications (wireless power transfer, WPT) have been attracting attention and have been actively discussed.

The wireless energy charge is being discussed from the viewpoints of cost and battery changing with respect to the IoT terminals, and from the viewpoints of cost, terminal size, or shape with respect to the handheld terminals. If wireless energy charge with high efficiency and high capacity is achieved, terminals are expected to become more advanced and diverse.

For example, discussions are held on: allocating a specific frequency band for wireless energy charge; verifying the impact on the human body, radio wave interference with other communication devices, or the like; and, if there are no problems, expanding the application range to outdoors or spaces with people.

In addition, in the 3GPP (registered trademark), discussions are held on developing the technical specifications for ultra-low power consumption terminals based on the assumption that the energy charge is performed by surrounding environments such as sunlight, wind, water, electromagnetism, heat, sound, vibration, etc., or by radio waves (for example, Non-Patent Literature 2). The battery charging, wired charging, or battery replacement will become unnecessary if the wireless energy charge is achieved.

The energy charge for the terminal 20B may be performed wirelessly by the terminal 20A or the energy charging device 30 that is connected to the terminal 20A. The terminal 20A, the energy charging device 30, or the like, that transmits the energy to the terminal 20B may be the same as, or different from, the terminal 20A or the like that transmits or receives data to or from the terminal 20B.

The device that performs energy charge, that is, the energy charging device 30 may have characteristics described in 1) to 3) below.

1) The type of the energy charging device 30 may be a base station, IAB (Integrated Access Backhaul), a repeater, an RIS (Reconfigurable Intelligent Surface), a TRP (transmission/reception point), or a device that corresponds to a terminal, or the function of a device for energy charge may be separately specified.
2) The base station, IAB, repeater, RIS, TRP, terminal, or the like, that performs wireless energy charge may be expected to have a full duplex function.
3) The base station, IAB, repeater, RIS, TRP, terminal, or the like, that performs wireless energy charge may be in a state of being connected to the base station at the time of energy charge, or may be in a non-connected state at the time of energy charge.

It is to be noted that the energy charging device, the base station, the IAB, the repeater, the RIS, the TRP, and the terminal may be replaced with each other.

The terminal 20 that receives energy charge may have characteristics described in 1) to 3) below.

1) May move or may be located at a fixed location.
2) May have or may not have capability of connecting to the base station, IAB, repeater, RIS, TRP, terminal, or the like, in order to perform data communications.
3) The terminal type or shape may be, but is not limited to, a handheld terminal (smartphone, tablet, etc.), an IoT terminal (sensor, wearable terminal, monitoring camera, smart device, home appliance, etc.), ambient IoT terminal (tag, card, etc.), robot, drone, electric vehicle, PC, etc.

Fig. 2 is a drawing illustrating a configuration example (1) of wireless energy charge related to an embodiment of the present invention. As illustrated in Fig. 2, the energy charging device 30 may be located separately from the terminal 20A and may perform wireless energy charge for the terminal 20B. The terminal 20A may perform communications with the terminal 20B and may control the wireless energy charge by the energy charging device 30. The energy charging device 30 may be located indoors on the wall, the ceiling, or the like, or may be located outdoors on a utility pole, a street light, or the like. In addition, the terminal 20B may operate as an energy charging device 30 to perform wireless energy charge for another terminal 20B. Hereinafter, "performing wireless energy charge for the terminal 20B by the energy charging device 30 that is not included in the terminal 20A" may be also referred to as "performing wireless energy charge for the terminal 20B by the terminal 20A".

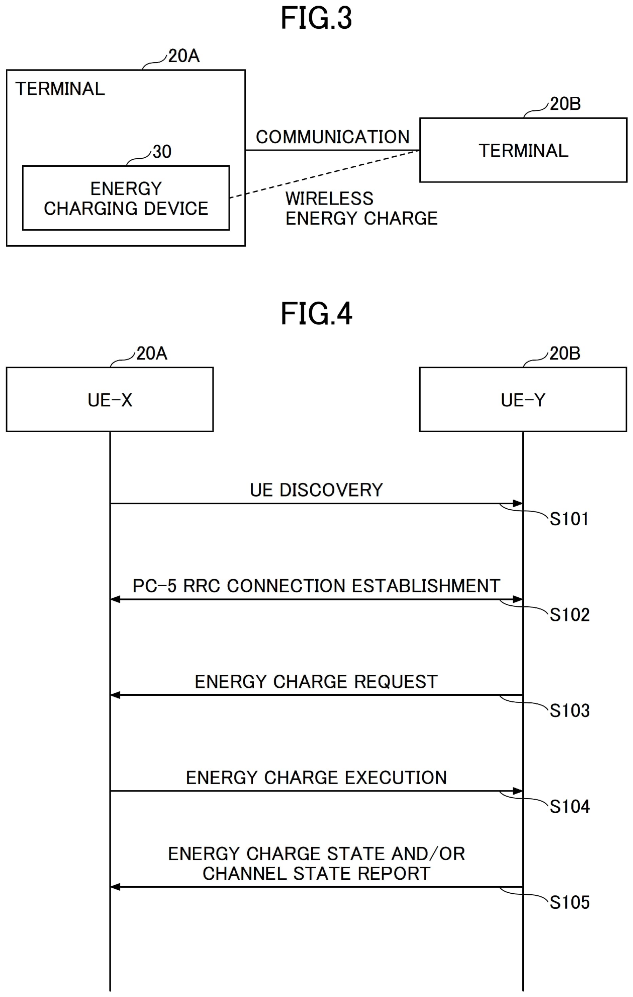

Fig. 3 is a drawing illustrating a configuration example (2) of wireless energy charge related to an embodiment of the present invention. As illustrated in Fig. 3, the energy charging device 30 may be located together with the terminal 20A and may perform wireless energy charge for the terminal 20B. The terminal 20A may perform communications with the terminal 20B and may control the wireless energy charge by the energy charging device 30. Hereinafter, "performing wireless energy charge for the terminal 20B by the energy charging device 30 that is included in the terminal 20A" may be also referred to as "performing wireless energy charge for the terminal 20B by the terminal 20A".

Here, there is expected to be a use case in which a terminal performs wireless energy charge for another device from among the various use cases. However, it is unclear how to perform wireless energy charge when the terminal performs sidelink communications.

Accordingly, in a case where a terminal performs sidelink communication especially by autonomously selecting a resource, the wireless energy charge may be performed as described in the following operation 1) to operation 7). It is to be noted that the following operation 1) to operation 7) may be applied also in a case where the sidelink communication is performed by using a resource based on an indication from the base station side or the network operator side. It is to be noted that one or a plurality of operations may be combined to be performed from among the operation 1) to operation 7), or all of the operations may be performed.

Hereinafter, operation 1) will be described.

A certain UE (hereinafter, referred to as "UE-X") performs energy charge for another UE (hereinafter, referred to as "UE-Y") by using wireless communication in sidelink. Any one of the steps illustrated in Fig. 4 may be included in the execution flow, all of the steps may be included, or some of the steps may be excluded and other steps may be included.

Fig. 4 is a sequence diagram for describing an example of wireless energy charge related to an embodiment of the present invention. In step S101, the UE-X transmits a UE discovery signal to the UE-Y. It is to be noted that the UE-Y may transmit a UE discovery signal to the UE-X. In subsequent step S102, the UE-Y and the UE-X performs PC5-RRC connection establishment. The UE-Y may start the PC5-RRC connection establishment, or the UE-X may start the PC5-RRC connection establishment.

In subsequent step S103, the UE-Y transmits an energy charge request to the UE-X. In subsequent step S104, the UE-X performs energy charge for the UE-Y. In subsequent step S105, the UE-Y transmits a report of energy charge state and/or channel state to the UE-X. The UE-X and the UE-Y may repeatedly execute step S104 and step S105.

In addition, an operation related to the beam control may or may not be performed. In a case where an operation related to the beam control is performed, a beam that is the same as the beam used for communication may be used for the energy charge. In addition, a beam control for wireless energy charge may be performed, and the beam control for wireless energy charge may be the same as the beam control for communication.

Operation 1) has been described above. According to the Operation 1), a terminal can perform wireless energy charge for another terminal.

Hereinafter, operation 2) will be described.

The UE-X that performs energy charge may transmit a signal for UE discovery. The transmission of the signal for UE discovery may mean an indication of being capable of performing energy charge. The UE-Y that receives energy charge may perform reception and/or monitoring of a signal for UE discovery. The UE-Y may determine the UE-X as an execution counterpart of the energy charge operation, based on the information related to the received signal (for example, strength). Thereafter, the PC5-RRC connection establishment may be performed between the UE-X and the UE-Y.

The UE-Y that receives the energy charge may transmit a signal for UE discovery. The transmission of the signal for UE discovery may mean an indication of searching for a UE that can perform energy charge. The UE-X that performs energy charge may perform reception and/or monitoring of a signal for UE discovery. The UE-X that performs energy charge may transmit a signal of a response to the UE-Y after reception of the signal for UE discovery. The signal of a response may be a signal indicating that the energy charge can be performed by the UE-X for the UE-Y. The UE-X may determine whether or not to transmit the signal of a response, based on the information related to the received signal (for example, strength). The UE-Y may determine the UE-X that has transmitted the signal of a response as an execution counterpart of the energy charge operation. Thereafter, the PC5-RRC connection establishment may be performed between the UE-X and the UE-Y.

The signal for discovery may transmitted by using a resource defined for discovery, by using a resource provided by a configuration or pre-configuration, or by using a resource for communication.

An indication of performing or receiving the wireless energy charge may be transmitted or received by using the signal for discovery. In addition, the information related to the wireless energy charge (for example, method, resource, or the like) may be transmitted or received by using the signal for discovery.

The transmission, reception, or monitoring of the signal for discovery may be performed regardless of presence or absence of execution of energy charge, or may be performed by limiting the period to a period in which the energy charge is not performed.

During or after the execution of the PC5-RRC connection establishment between the UE-X and the UE-Y, capability related to the wireless energy charge may be transmitted or received, and the PC5-RRC connection establishment may be determined to be a success or a failure based on the capability. Whether the UE-X transmits the discovery signal or the UE-Y transmits the discovery signal may be defined by the technical specification or may be determined based on the (pre-) configuration.

Operation 2) has been described above. According to the Operation 2), an execution counterpart of the energy charge operation can be discovered.

Hereinafter, operation 3) will be described.

The UE-Y may transmit a request for energy charge to the UE-X. One or a plurality of information items described in the following 1) to 12) may be transmitted in the request for energy charge.

1) Information indicating an amount of energy charge to be received. For example, the information may be energy [Wh], and may be the remaining battery capacity, insufficient battery capacity, and/or chargeable battery capacity at the time of reporting. The UE-X may determine the amount of energy charge based on the information.
2) Channel state. For example, the channel state may be information that is measured based on the signal related to the above-described operation 2), or may be information that is measured based on the above-described signal for discovery. In addition, the channel state may be information that is measured based on the signal for communication.
3) Capability related to wireless energy charge. The capability may be a capability indicating presence or absence of a support related to the energy charge method, or may be a capability indicating presence or absence of a support of simultaneous execution of communication and wireless energy charge.
4) Capability information related to wireless energy charge. The information may include some of or all of: frequency; carrier; band; FR (Frequency Range); band combination; and network type, in which the energy charge can be received. A support of the energy charge may be reported from the UE-Y to the UE-X on a per-frequency basis, a per-carrier basis, a per-band basis, a per-FR basis, a per-band combination basis, or a per-network type basis.

The network type may be any one of TN (Terrestrial Network), NTN (Non-Terrestrial Network), licensed-spectrum, unlicensed-spectrum, IAB (Integrated Access and Backhaul), NCR (Network-controlled repeater), RIS (Reconfigurable Intelligent Surface), Uu (Radio interface between UTRAN (Universal Terrestrial Radio Access Network) and UE (User Equipment)), or SL (Sidelink). In other words, whether or not energy charge can be received in a network related to each of the above-described networks may be reported from the UE-Y to the UE-Y.

5) Capability information related to wireless energy charge. The information may include a method with which energy charge can be received. The support of energy reception may be reported from the UE-Y to the UE-X on a per-method basis. One method may be reported as a default method, and other methods may be reported to the UE-X as additionally supported methods. The methods may include waveforms, subcarrier spacings, signal types, the number of antennas, and beam management operations.
6) Capability information related to wireless energy charge. The information may include the maximum energy reception capacity that can be supported, the maximum efficiency that can be supported, and/or the maximum power that can be supported. The maximum energy reception capacity per specific time period, the maximum efficiency per specific time period, and/or the maximum power per specific time period may be reported. A specific energy reception capacity, a specific efficiency, and/or a specific power may be specified, and the satisfying of the specific energy reception capacity, the specific efficiency, and/or the specific power may be reported.
7) Capability information indicating the support of simultaneous execution of energy reception and communication for each FR combination or band combination. The UE-Y may report the support of the simultaneous execution of both energy reception and communication to the UE-X on a per-band combination basis.
8) Capability information indicating the support of simultaneous execution of energy reception and communication for each network type. The network type may be a network related to one of TN, NTN, licensed band, unlicensed band, IAB, NCR, RIS, Uu, or SL.
9) Capability information indicating the support of simultaneous execution of energy reception and communication for each energy charge method. The method of communications may be any one of DL, UL, or full duplex transmission. The UE-Y may report the support of the simultaneous execution of both energy reception and communications to the UE-X on a per-method of communication basis.
10) Capability information separately indicating the support of simultaneous execution of energy reception and communication depending on whether or not the communication beam is the same as the energy charge beam.
11) Capability information separately indicating the support of simultaneous execution of energy reception and communication depending on whether or not the communication cell (or band) is the same as the energy charge cell (or band).
12) Capability information separately indicating the support of simultaneous execution of energy reception and communication depending on whether or not the communication counterpart is the same as the energy charge counterpart. The counterpart may be a device or TRP.

It is to be noted that the support of the simultaneous execution may be determined based on a condition that the qualities respectively required for the communications and the energy charge at the time of non-simultaneous execution are to be satisfied at the time of simultaneous execution of both communications and energy charge, or may be determined based on a condition that the qualities that are below the qualities respectively required for the communications and the energy charge at the time of non-simultaneous execution by a predetermined value are to be satisfied at the time of simultaneous execution of both communications and energy charge.

The transmission timing and/or the resource for the energy charge request signal may be autonomously determined by the UE-Y. The transmission timing for the energy charge request signal may be limited to a timing at which the energy charge is not being received and/or a timing at which the energy charge is not determined to be received in the future.

The transmission and reception of the energy charge request signal may be performed by using any one of the control channel (PSCCH), the data channel (PSSCH), the discovery channel (PSDCH), and the report channel (PSFCH (Physical Sidelink Feedback Channel)).

In a case where the energy charge request signal is transmitted by being included in SL-SCH (Sidelink Shared Channel), the transmission may be performed by using any one of MAC-CE, MAC sub-header, and MAC-SDU (Service data unit). The priority order between the energy charge request signal, data from SL-CCCH (Common Control Channel), data from any one of logical channels other than SL-CCCH, or MAC-CE may be freely determined. For example, the priority of the energy charge request signal may be lower than that of the data from SL-CCCH. For example, the priority of the energy charge request signal may be lower than that of the data from any one of logical channels other than SL-CCCH.

The priority order between the energy charge request signal and the UL signal may be defined. The priority of the energy charge request signal may be either higher than or lower than the priority related to wireless energy charge in Uu. The priority of the energy charge request signal may be either higher than or lower than the priority related to control information in Uu. The priority of the energy charge request signal may be either higher than or lower than the priority related to a data signal in Uu.

Operation 3) has been described above. According to the Operation 3), a certain terminal can request wireless energy charge from another terminal.

Hereinafter, operation 4) will be described.

The UE-X may transmit information related to energy charge resources to the UE-Y and/or other UEs, and may perform energy charge for the UE-Y.

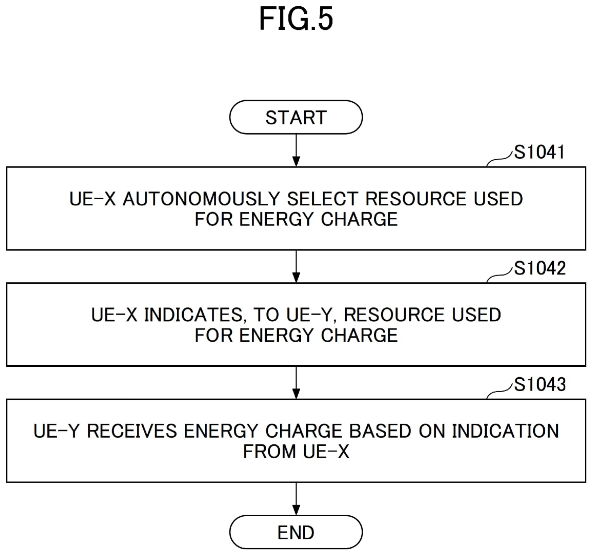

Fig. 5 is a flowchart for describing an example of wireless energy charge related to an embodiment of the present invention. In step S1041, the UE-X autonomously selects a resource used for energy charge. The UE-Xs (UE-X1, UE-X2, ...) may indicate resources used for energy charge to each other, monitor the indications, and determine the resources used for energy charge in a manner in which the resources do not overlap with each other, based on the indications, for example. It is to be noted that the resources used for energy charge may be scheduled for the UE-X by the base station 10. It is to be noted that the overlap may mean an overlap in the time domain or may mean an overlap in the frequency domain.

In step S1042, the UE-X indicates the resource used for energy charge to the UE-Y. The resource used for energy charge may be indicated as a periodic resource, may be indicated as an aperiodic resource, or may be indicated as a semi-persistent resource for which activation, deactivation, or release may be indicated. The resource used for energy charge may be indicated as having a specific time length. The indication unit of the resource used for energy charge may be a slot, may be a frame, or may be a millisecond, a second, a minute, or the like. The indication unit of the resource used for energy charge may be a PRB and/or a subchannel, may be a band, a bandwidth, and/or a BWP, or may be a carrier frequency and/or an FR. The beam for energy charge corresponding to the resource may be indicated together with the resource used for energy charge. The indication of the resource used for energy charge may be performed by using a resource for communication.

In step S1043, the UE-Y receives energy charge based on the indication from the UE-X. For example, the UE-Y may receive energy charge by using a time resource for which a beam of the UE-X for energy charge corresponding to a beam for energy charge used by the UE-Y itself is used. For example, the UE-Y may receive energy charge by using a time resource for which a transmission beam of the UE-X for energy charge corresponding to a reception beam for energy charge used by the UE-Y itself is used. The UE-Y may receive energy charge by using the indicated resource and/or by using the time resource from which the UE-Y itself can receive energy charge. The UE-Y may receive energy charge by using all of the time resources or by using a part of the time resources from among the indicated resources.

In addition, the UE-Y may expect that the time period between an indication related to energy charge and the energy charge start timing is to be equal to or greater than a predetermined period. The predetermined period may be determined based on the UE processing time.

The indication from the UE-X to the UE-Y may be performed by using any format from among the following a) to e).

a) Groupcast PSSCH (for example, MAC-CE), SCI for all UEs and/or SCI for a plurality of UEs. All of the information items including which energy charge resource and which energy charge beam are to be used for energy charge may be broadcast. The resource information related to the energy charge beam corresponding to the communication beam used for the broadcast may be broadcast. A new SCI format for energy charge may be defined and the resource for reception of the SCI format may be configured or pre-configured. The information may be indicated via a field in the SCI format for communication.
b) PC5-RRC connection, unicast PSSCH (for example, MAC-CE), and/or SCI for a specific UE. Information of resources from which the UE is to receive energy charge may be indicated. The resource information related to the energy charge beam corresponding to the communication beam used for the broadcast may be broadcast. A new SCI format for energy charge may be defined and the resource for reception of the SCI format may be configured or pre-configured. The information may be indicated via a field in the SCI format for communication.
c) RNTI (Radio Network Temporary Identifier) for transmission of energy charge related information may be defined and used for the indication. The RNTI may be applied for the above-described a) and/or the above-described b).
d) An RRC parameter or (pre-) configuration may be used for determining which format is to be used for the indication.
e) The UE capability indicating which format is supported for reception of the indication may be defined and the support of the function may be reported to the supported function. Alternatively, the support of the wireless energy charge may mean that a plurality of all of the defined indication formats are supported.

In addition, resources for energy charge and resources for communication may be included in the same resource pool, may be defined to be included in different resource pools, or may be configured or pre-configured.

Operation 4) has been described above. According to the operation 4), an operation of receiving energy charge can be performed by using the appropriate resource. In addition, an indication related to energy charge can be transmitted and received by using an appropriate format.

Hereinafter, operation 5) will be described.

Information related to the energy charge state may be reported from the UE-Y to the UE-X. The information may be information described in the following a) to d).

a) The information may be power [W], average power [W] and/or energy [Wh] related to energy charge that is performed during a specific time period T. The start timing of the specific time period T may be an energy charge start timing, a previous report timing, or a specified timing. The end timing of the specific time period T may be a timing immediately before the report, a specified timing, or a timing after an elapse of T from the start timing. Hereinafter, the same definition of the specific time period T will be applied. The range and/or the granularity of the report value may be pre-defined or configured. In addition, the report contents may be an index corresponding to the report value, and the association between the report value and the index may be pre-defined or configured. For example, an index Z1 may be reported in a case where the report value is equal to or greater than X1 and is less than X2, and an index Z2 may be reported in a case where the report value is equal to or greater than X2 and is less than X3.
b) The information may be information indicating whether or not the energy charge that is performed during the specific time period T satisfies a specific condition. The information may be information indicating whether or not the power [W], average power [W] and/or energy [Wh] related to energy charge that is performed during the specific time period T exceeds a predetermined value. With respect to the energy charge that is performed during a specific time period T, the information may be information indicating whether or not the energy charge is received during a period that is equal to or greater than a specific time period T2. The above-described predetermined value and the above-described specific time period T2 may be pre-defined or configured. ACK (for example, bit value 1) or NACK (for example, bit value 0) may be reported from the UE-Y to the UE-X as the information indicating whether or not the energy charge that is performed during the specific time period T satisfies a specific condition.
c) The information may be information indicating how much energy charge is desired to be additionally received. For example, the information may be energy [Wh]. For example, the information may be the remaining battery capacity or the shortage of battery capacity at the time of reporting.
d) The information may be information indicating the result of quality measurement related to the energy charge beam.

The report of the information related to the state of energy charge may be performed at the timings described in a) to f) below. The report of the information may be reported from the UE-Y to the UE-X.

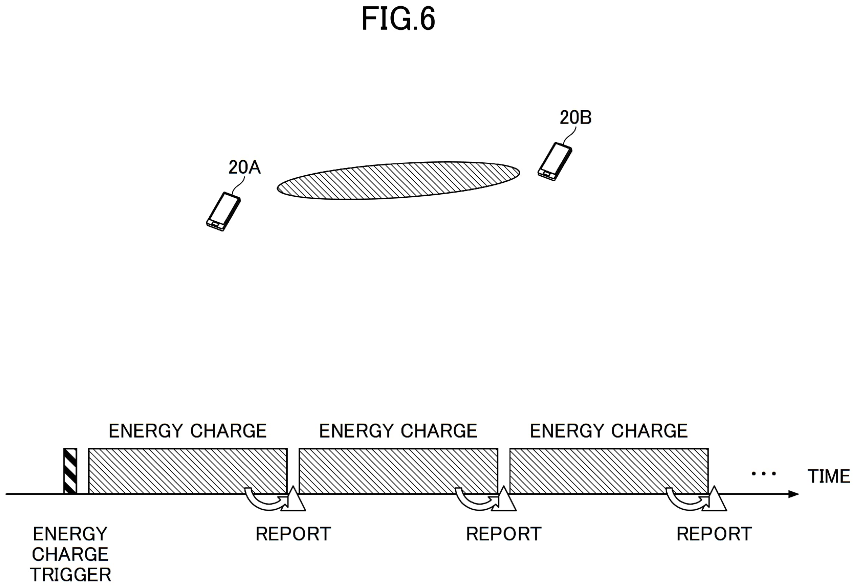

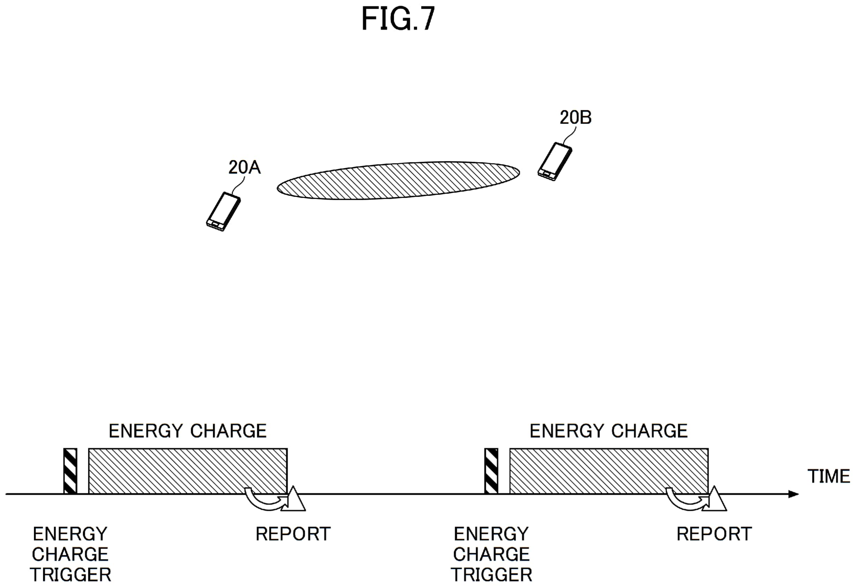

a) The report of information related to the state of energy charge may be performed periodically. Fig. 6 is a drawing for describing an example (1) of wireless energy charge related to an embodiment of the present invention. As illustrated in Fig. 6, periodic resources related to energy charge may be indicated by the UE-X, and the report of the information related to the state of the energy charge may be performed by using a resource used for the report that is determined based on the periodic resources. The UE-Y may start the energy charge when an energy charge trigger for starting the energy charge is received from the UE-X, and in addition, may start the report of information related to the energy charge state. The energy charge trigger transmitted from the UE-X to the UE-Y may include information indicating the periodic resources, or the periodic resources may be configured in advance. The UE-Y may report, to the UE-X, the information related to the energy charge state only during the period between the start of energy charge and the end of energy charge. In addition, after the start of the report related to the energy charge state, the UE-Y may continue reporting until the change of the configuration of the report of information related to the energy charge state regardless of presence or absence of energy charge.
b) The report of information related to the energy charge state may be performed semi-persistently. Periodic resources may be configured by the UE-X and the UE-Y may report, to the UE-X, the information related to the energy charge state by using the periodic resources, based on a configuration or an indication for activation or deactivation (release). The UE-Y may periodically report, to the UE-X, the information related to the energy charge state during a period after the activation until the deactivation. The UE-Y may transmit ACK or NACK to the UE-X in response to reception of the deactivation command. The activation or deactivation may be indicated to the UE-Y by using DCI or MAC-CE (Medium Access Control - Control Element). The UE-Y may report, to the UE-X, the information related to the energy charge state only during the period between the start of energy charge and the end of energy charge. In addition, after the start of the report related to the energy charge state, the UE-Y may continue reporting based on the activation or deactivation regardless of presence or absence of energy charge.
c) The report of information related to the energy charge state may be performed aperiodically. Fig. 7 is a drawing for describing an example (2) of wireless energy charge related to an embodiment of the present invention. As illustrated in Fig. 7, a report and a resource used for the report may be indicated by the UE-X and the UE-Y may aperiodically perform the report of information related to the energy charge state by using the resource. In addition, the report may be indicated by the UE-X and the UE-Y may perform the report related to the energy charge state by using an autonomously selected resource. As illustrated in Fig. 7, the UE-Y may report the information related to the energy charge state to the UE-X every time the UE-Y performs energy charge based on an energy charge trigger. In addition, the UE-Y may report, to the UE-X, the information related to the energy charge state at a timing determined by the UE-Y itself based on a specific condition.
d) The report timing and/or the resource may be specified by an indication related to energy charge execution, or activation of the report may be performed. For example, the indication related to energy charge execution may be an energy charge trigger illustrated in Fig. 6 or Fig. 7. The UE-Y may start or perform the report related to the energy charge state, based on the indication related to energy charge execution.
e) The UE-Y may assume that the period between: the report indication, the report activation, or the end timing of the measurement target (for example, end timing of energy charge); and the report execution is to be equal to or greater than a predetermined value. The predetermined value may be specified or determined based on the UE processing time, for example.
f) The report may be performed by limiting the case to a case in which the energy charge state satisfies a predetermined condition. In addition, the report may be performed by limiting the case to a case in which the state of energy charge does not satisfy a predetermined condition.

The transmission timing and/or the resource for the report related to the energy charge state may be autonomously determined by the UE-Y. The transmission timing for the report related to the energy charge state may be limited to a timing at which the energy charge is not being received and/or a timing at which the energy charge is not determined to be received in the future.

The transmission and reception of the report related to the energy charge state may be performed by using any one of the control channel (PSCCH), the data channel (PSSCH), the discovery channel (PSDCH), and the report channel (PSFCH (Physical Sidelink Feedback Channel)).

In a case where the report related to the energy charge state is transmitted by being included in SL-SCH (Sidelink Shared Channel), the transmission may be performed by using any one of MAC-CE, MAC sub-header, and MAC-SDU (Service data unit). The priority order between the report related to the energy charge state, data from SL-CCCH (Common Control Channel), data from any one of logical channels other than SL-CCCH, or MAC-CE may be freely determined. For example, the priority of the report related to the energy charge state may be lower than that of the data from SL-CCCH. For example, the priority of the report related to the energy charge state may be lower than that of the data from any one of logical channels other than SL-CCCH.

The priority order between the report of the energy charge state and the UL signal may be defined. The priority of the report of the energy charge state may be either higher than or lower than the priority related to wireless energy charge in Uu. The priority of the report of the energy charge state may be either higher than or lower than the priority related to control information in Uu. The priority of the report of the energy charge state may be either higher than or lower than the priority related to a data signal in Uu.

Operation 5) has been described above. According to the operation 5), the terminal 20 is enabled to report the information related to the result of execution of the energy charge and the base station 10 can appropriately control the subsequent energy charge operation thereafter. In addition, the UE-X and the UE-Y can share the same understanding with respect to the report timing of the energy charge state.

Hereinafter, operation 6) will be described.

In a case where the energy charge and the communication cannot be performed simultaneously, the UE-X and/or the UE-Y may perform one by prioritizing the one over the other. It is to be noted that the overlap may mean an overlap in the time domain or may mean an overlap in the frequency domain.

The UE-X may perform a resource allocation operation in a manner in which no overlap between the energy charge and the communication will be generated by the operation. The UE-X is not required to select a resource that overlaps with a communication resource at the time of selecting an energy charge resource. The UE-X is not required to select a resource that overlaps with an energy charge resource at the time of selecting a communication resource. The UE-X is not required to select a resource that overlaps with a communication resource at the time of selecting an energy charge resource, and the UE-X is not required to select a resource that overlaps with an energy charge resource at the time of selecting a communication resource. The UE-X may perform one of an operation of not selecting a resource that overlaps with a communication resource at the time of selecting an energy charge resource or an operation of not selecting a resource that overlaps with an energy charge resource at the time of selecting a communication resource, or which operation may be determined to be performed based on the priority of the energy charge and the priority of the communication, for example. It is to be noted that the UE-X may operate in a manner in which the overlap does not occur at the UE-X, or the UE-X may operate in a manner in which the overlap does not occur at the UE-Y. For example, the UE-Y indicates the UE capability related to the overlap to the UE-X in advance, and the UE-X performs resource selection in a manner in which the overlap does not occur at the UE-Y, based on the capability of the UE-Y.

The UE-X may perform an operation in a manner in which an overlap does not occur at the time of execution of the energy charge and/or the communication. The UE-X may drop one of the energy charge and the communication and may perform the other, or the UE-X may determine which one is to be performed based on the priority of the energy charge and the priority of the communication, for example. The priority order between the energy charge and the communication may be defined in advance, may be provided by a configuration, a pre-configuration, or a PC5-RRC configuration, or may be autonomously determined by the UE-X.

The priority order between the communications and the energy charge may be specified on a per-communication type basis. For example, the priority of energy charge may be lower than that of S-SSB, PSCCH, PSFCH (HARQ-ACK), or PSSCH. In addition, the priority of the SL positioning RS may be lower than that of the energy charge. A plurality of priorities may be defined or configured for the energy charge and the priority order with respect to the communication may be specified for each of the priorities. For example, the energy charge during a specific time period may have a high priority (HP), and the energy charge during a period other than the specific time period may have a low priority (LP). In addition, the priority of the HP energy charge may be lower than that of the HP communication. The priority of the LP energy charge may be lower than that of the HP energy charge.

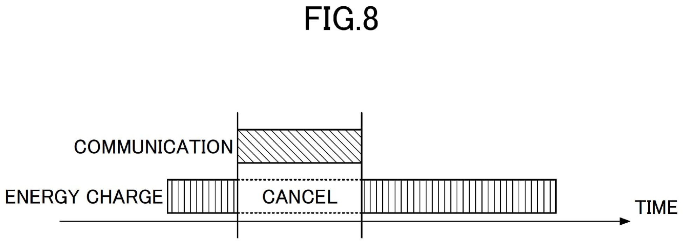

Fig. 8 is a drawing illustrating an example (3) of wireless energy charge related to an embodiment of the present invention. As illustrated as Fig. 8, the energy charge is not required to be performed only during a period in which there is an overlap between the energy charge and the communication. In addition, in a case where there is a partial overlap between the energy charge and the communication, a predetermined unit (for example, a whole unit) of the energy charge is not required to be performed. Non-execution of the energy charge may mean to drop the energy charge, may mean to cancel the energy charge, or may mean to postpone the energy charge.

In a case where the UE-X does not provide energy charge by using a resource that has already been indicated to the UE-Y as a resource for performing energy charge, the UE-X may indicate, to the UE-Y, that the energy charge is to be not performed by using the resource at the timing before the resource or at the timing after the resource.

In order to perform an operation in which an overlap does not occur, the UE-Y may perform an operate in the resource allocation operation in a manner in which the UE-Y does not include a resource that overlaps with energy charge in the preferred resource and includes the resource that overlaps with energy charge in the non-preferred resource when the UE-Y performs an indication of the preferred resource or the non-preferred resource with respect to the inter-UE coordination. In addition, in a case where the UE-Y detects an overlap between the communication and the energy charge in the conflict indication for the inter-UE coordination, the UE-Y may indicate the conflict to the UE-X or the communication counterpart.

The UE-Y may perform an operation in a manner in which an overlap does not occur at the time of execution of the energy charge and/or the communication. The UE-Y may drop one of the energy charge and the communication and may perform the other, or the UE-X may determine which one is to be performed based on the priority of the energy charge and the priority of the communication, for example. The priority order between the energy charge and the communication may be defined in advance, may be provided by a configuration, a pre-configuration, or a PC5-RRC configuration, or may be autonomously determined by the UE-Y.

The priority order between the communications and the energy charge may be specified on a per-communication type basis. For example, the priority of energy charge may be lower than that of S-SSB, PSCCH, PSFCH (HARQ-ACK), or PSSCH. In addition, the priority of the SL positioning RS may be lower than that of the energy charge. A plurality of priorities may be defined or configured for the energy charge and the priority order with respect to the communication may be specified for each of the priorities. For example, the energy charge during a specific time period may have a high priority (HP), and the energy charge during a period other than the specific time period may have a low priority (LP). In addition, the priority of the HP energy charge may be lower than that of the HP communication. The priority of the LP energy charge may be lower than that of the HP energy charge.

Operation 6) has been described above. According to the Operation 6), an operation can be performed to avoid an overlap between the energy charge and the communication, and an operation in a case where there is an overlap can be determined.

Hereinafter, operation 7) will be described.

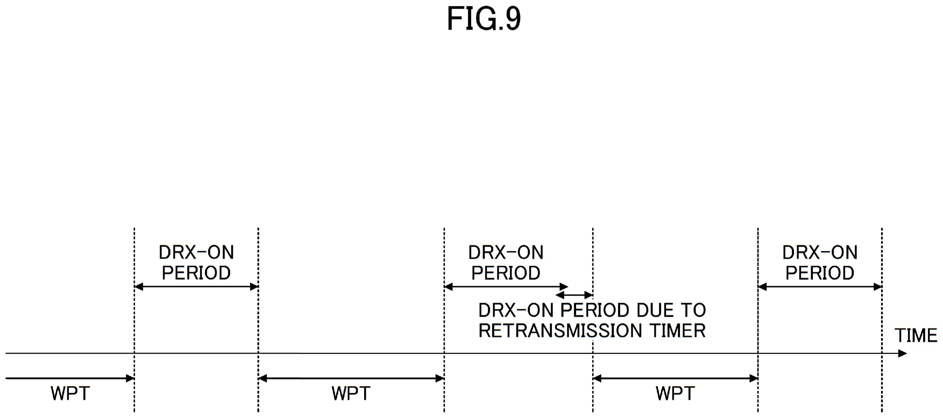

Fig. 9 is a drawing illustrating an example (4) of wireless energy charge related to an embodiment of the present invention. As illustrated in Fig. 9, an operation related to the wireless energy charge may be performed during a time period (hereinafter, referred to as "time period X") in which signal reception and/or transmission are/is not performed in the function for reducing the energy consumption (hereinafter, referred to as "function F").

The function F may be SL-DRX as illustrated in Fig. 9, may be transmission based on the partial sensing, or may be transmission according to the random selection.

The UE-X and/or UE-Y may perform energy charge operations during the time period X in which signal reception is not performed in the energy consumption function F. It is to be noted that "signal reception" may be replaced with "signal reception and/or transmission". In addition, the signal reception may or may not include sensing. Hereinafter, the UE may be replaced with the UE-X and/or the UE-Y.

The UE is not required to perform an energy charge operation during a time period Y in which signal reception is performed.

The UE may perform an energy charge operation during the entire period of the time period X, or may perform an energy charge operation during a part of the time period. The energy charge operation is not required to be performed during a period other than the part of the time period among the time period X, based on the UE processing time. The energy charge operation may be performed by limiting the period to a time period in which an operation related to the energy charge is configured or indicated to be performed.

In a case where the function F is DRX, an operation related to the energy charge may be performed during a time period X in which reception of an SL signal (for example, PDCCH or PDSCH) is not performed, based on the DRX function, or an operation related to the energy charge is not required to be performed during the DRX-ON period or during a time period Y in which reception of an SL signal is performed based on the DRX function.

The above-described operation in which an energy charge operation is performed during the time period X in which signal reception is not performed in the function F in which the energy consumption is reduced by the UE may be applied by limiting the case to a case in which the UE cannot perform the communication and the energy charge simultaneously, or the above-described operation may be determined to be applied or not to be applied based on an indication from the base station 10 or a (pre-) configuration.

In addition, the energy charge operation may be expected to be performed only in a case where the function F for reducing the energy consumption is configured. In a case where the function F is not configured, the wireless energy charge is not required to be performed.

In addition, the UE that is capable of performing the energy charge operation may be always capable of perform the function F for reducing the energy consumption. The UE that reports, to the network or other UEs, that the UE is capable of performing the energy charge operation may be required to report, to the network or other UEs, that the UE is also capable of performing the function F for reducing the energy consumption.

In a case where the UE-X does not provide energy charge by using a resource that has already been indicated to the UE-Y as a resource for performing energy charge, the UE-X may indicate, to the UE-Y, that the energy charge is to be not performed by using the resource at the timing before the resource or at the timing after the resource. It is to be noted that the energy charge may mean the energy transmission and/or the energy reception.

Operation 7) has been described above. According to the Operation 7), the energy can be efficiently provided between the UEs by using the energy charge while reducing the energy consumption related to the communication. The remaining battery amount can be increased during the time period in which the energy consumption is reduced by the UE. The energy charge operation can be optimized with respect to the non-reception time period that is determined according to the various functions, and the degradation of the communication quality can be avoided.

According to an embodiment of the present invention, wireless energy charge can be performed by the terminal in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

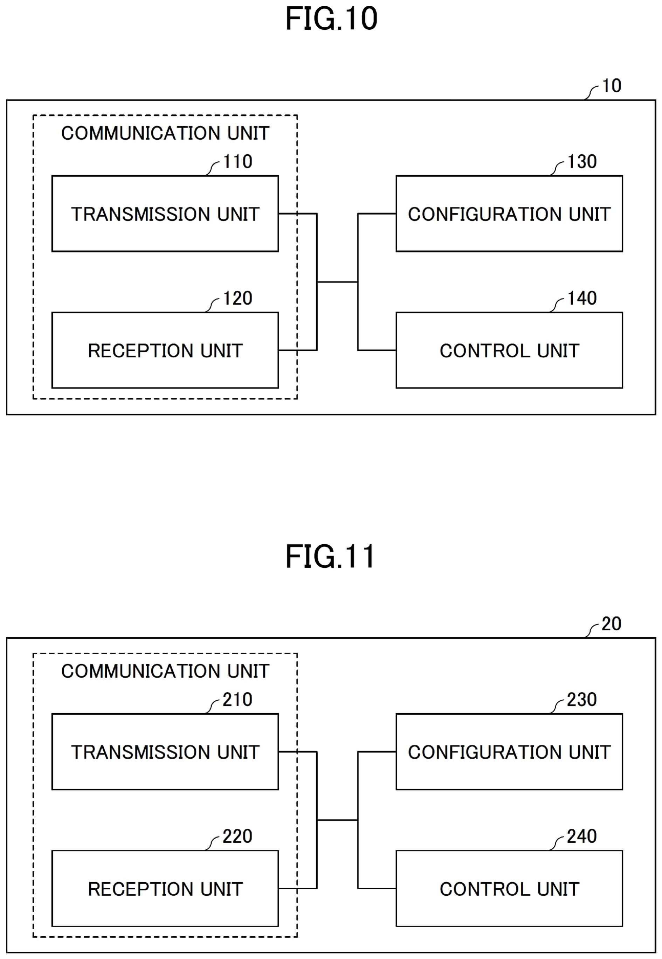

Fig. 10 is a drawing illustrating an example of a functional structure of a base station 10 according to an embodiment of the present invention. As shown in Fig. 10, the base station 10 includes a transmission unit 110, a reception unit 120, a configuration unit 130, and a control unit 140. The functional configuration illustrated in Fig. 10 is merely an example. Functional divisions and names of functional units may be anything as long as operations according to an embodiment of the present invention can be performed. It is to be noted that the energy charging device 30 may have the same functional configuration as the base station 10.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the wireless energy charge.

The control unit 140 performs control that enables functions described in an embodiment of the present invention. In addition, the control unit 140 performs control related to the wireless energy charge as described in an embodiment of the present invention. The functional units related to signal transmission in the control unit 140 may be included in the transmission unit 110, and the functional units related to signal reception in the control unit 140 may be included in the reception unit 120.

### <Terminal 20>

Fig. 11 is a drawing illustrating an example of a functional structure of a terminal 20 according to an embodiment of the present invention. As shown in Fig. 11, the terminal 20 includes a transmission unit 210, a reception unit 220, a configuration unit 230, and a control unit 240. The functional configuration illustrated in Fig. 11 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the wireless energy charge.

The control unit 240 performs control that enables functions described in an embodiment of the present invention. In addition, the control unit 240 performs control related to the wireless energy charge as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 10 and Fig. 11) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

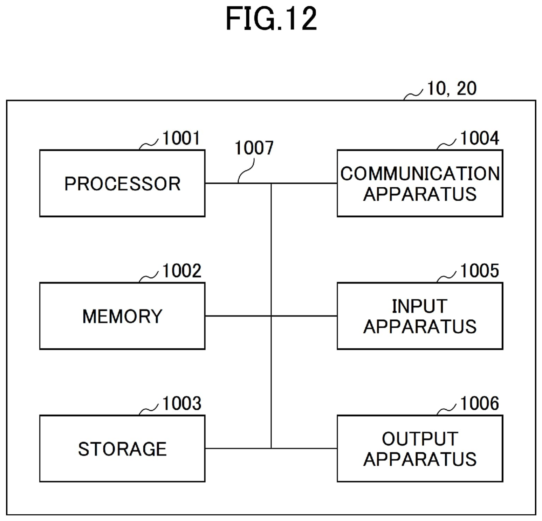

For example, the base station 10, the terminal 20, etc., according to an embodiment of the present disclosure may function as a computer for processing the radio communication method of the present disclosure. Fig. 12 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on. It is to be noted that the energy charging device 30 may have the same hardware configuration as the base station 10.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 10 may be implemented by control programs that are stored in the memory 1002 and that operate on the processor 1001. In addition, for example, the control unit 240 of the terminal 20 illustrated in Fig. 11 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

In addition, the energy charging device 30 may have hardware including an energy transmission unit for performing the wireless energy charge for the terminal 20. In addition, the terminal 20 may have hardware including an energy reception unit for receiving the wireless energy charge from the energy charging device 30. In addition, the terminal 20 may have hardware including an energy transmission unit for performing the wireless energy charge for the terminal 20.

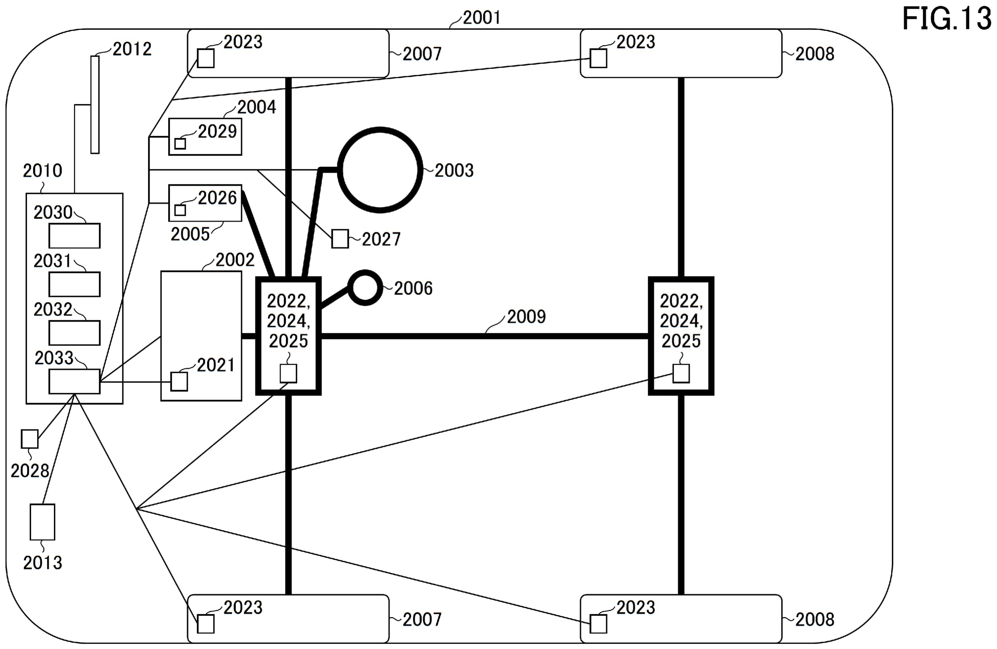

Fig. 13 shows an example of a configuration of a vehicle 2001. As shown in Fig. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a communication unit configured to receive a discovery signal from a first terminal or to transmit a discovery signal to the first terminal. The communication unit transmits an energy charge request signal to the first terminal, the communication unit receives information indicating a first resource used for energy charge from the first terminal, and the communication unit includes an energy reception unit configured to receive energy charge from the first terminal by using the first resource.

According to the above-described configuration, wireless energy charge can be performed by the terminal in the wireless communication system.

The terminal may include a control unit configured to determine to receive energy charge from the first terminal, based on strength of a signal received from the first terminal. According to the above-described configuration, wireless energy charge can be performed by the terminal in the wireless communication system.

The communication unit may transmit, to the first terminal, capability related to wireless energy charge via the energy charge request signal. According to the above-described configuration, the terminal can perform wireless energy charge efficiently in the wireless communication system.

The communication unit may transmit an energy charge capacity to the first terminal via the energy charge request signal. According to the above-described configuration, the terminal can perform wireless energy charge efficiently in the wireless communication system.

The energy reception unit may receive energy charge by using a time resource for which an energy charge transmission beam used by the first terminal corresponding to an energy charge reception beam used by the terminal itself is used. According to the above-described configuration, wireless energy charge can be performed by the terminal in the wireless communication system.

In addition, according to an embodiment of the present invention, an energy charge method performed by a terminal is provided. The energy charge method includes: receiving a discovery signal from a first terminal or transmitting a discovery signal to the first terminal; transmitting an energy charge request signal to the first terminal; receiving a first resource used for energy charge from the first terminal; and receiving energy charge from the first terminal by using the first resource.

According to the above-described configuration, wireless energy charge can be performed by the terminal in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Power transmission device
- 1001: Processor
- 1002: Memory
- 1003: Storage
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A terminal comprising:
a communication unit configured to receive a discovery signal from a first terminal or to transmit a discovery signal to the first terminal, wherein
the communication unit transmits an energy charge request signal to the first terminal, the communication unit receives information indicating a first resource used for energy charge from the first terminal, and the communication unit includes an energy reception unit configured to receive energy charge from the first terminal by using the first resource.

2. The terminal as claimed in claim 1, further comprising:
a control unit configured to determine to receive energy charge from the first terminal, based on strength of a signal received from the first terminal.

3. The terminal as claimed in claim 1, wherein
the communication unit transmits, to the first terminal, capability related to wireless energy charge via the energy charge request signal.

4. The terminal as claimed in claim 1, wherein
the communication unit transmits an energy charge capacity to the first terminal via the energy charge request signal.

5. The terminal as claimed in claim 1, wherein
the energy reception unit receives energy charge by using a time resource for which an energy charge transmission beam used by the first terminal corresponding to an energy charge reception beam used by the terminal itself is used.

6. An energy charge method performed by a terminal, the energy charge method comprising:
receiving a discovery signal from a first terminal or transmitting a discovery signal to the first terminal;
transmitting an energy charge request signal to the first terminal;
receiving a first resource used for energy charge from the first terminal; and
receiving energy charge from the first terminal by using the first resource.
